# EUROPÄISCHE PATENTANMELDUNG

(11) **EP 3 670 085 A1**
(43) Veröffentlichungstag der Anmeldung: **24.06.2020**
(21) Anmeldenummer: 18215032.6
(22) Anmeldetag: 21.12.2018
(51) Int. Cl.: B25B 23/04, B25C 1/00

(54) **VEREINZELUNGSVORRICHTUNG, MAGAZINVORSATZ UND BEFESTIGUNGSSYSTEM**

(71) Anmelder: Hilti Aktiengesellschaft, 9494 Schaan (LI)
(72) Erfinder: Foser, Thomas, 9496 Balzers (LI); Ruhstaller, Michael, 8858 Innerthal (CH)
(74) Vertreter: Hilti Aktiengesellschaft Corporate Intellectual Property

(57) **Zusammenfassung**

Vereinzelungsvorrichtung (50) zur Vereinzelung eines Befestigungselements (60) aus einem mit Befestigungselementen gefüllten Behälter, mit einem Transportkanal (51) für einen Transport der Befestigungselemente in einer Transportrichtung, wobei der Transportkanal einen Vereinzelungsabschnitt (53) aufweist, mit einem Anschlagelement (110), welches eine Sperrstellung, in der das Anschlagelement in den Vereinzelungsabschnitt hineinragt und den Transportkanal für das Befestigungselement sperrt, so dass ein Befestigungselement in einer Wartestellung an dem Anschlagelement anliegt, und eine Weitergabestellung, in der das Anschlagelement eine Bewegung des Befestigungselements in der Transportrichtung zu einer Bereitschaftsstellung erlaubt, aufweist, und mit einem Rückhalteelement (120), welches eine Rückhaltestellung, in der das Rückhalteelement in den Vereinzelungsabschnitt hineinragt und den Transportkanal für das Befestigungselement sperrt, so dass das Befestigungselement in der Bereitschaftsstellung an dem Rückhalteelement anliegt, und eine Freigabestellung, in der das Rückhalteelement eine Bewegung des Befestigungselements in der Transportrichtung über den Vereinzelungsabschnitt hinaus erlaubt, aufweist.

## Beschreibung

Die Erfindung betrifft eine Vereinzelungsvorrichtung, einen Magazinvorsatz mit einer solchen Vereinzelungsvorrichtung sowie ein Befestigungssystem mit einer Eintreibvorrichtung und einem solchen Magazinvorsatz.

Befestigungselemente, wie beispielsweise Schrauben oder Nägel, werden üblicherweise während des Eintreibvorgangs in einen Untergrund durch eine Eintreibvorrichtung von dem Befestigungselementestreifen vereinzelt. Es sind Vereinzelungsvorrichtungen bekannt, bei denen Befestigungselemente einen Behälter füllen, aus dem sie vereinzelt und in einer Transportrichtung transportiert werden.

Es ist eine Aufgabe der Erfindung, eine Vereinzelungsvorrichtung, einen Magazinvorsatz und ein Befestigungssystem zur Verfügung zu stellen, mit der oder dem jeweils ein Vereinzelungsvorgang verbessert ist.

Die Aufgabe ist gelöst bei einer Vereinzelungsvorrichtung zur Vereinzelung eines Befestigungselements aus einem mit Befestigungselementen gefüllten Behälter, mit einem Transportkanal für einen Transport der Befestigungselemente in einer Transportrichtung, wobei der Transportkanal einen Vereinzelungsabschnitt aufweist, mit einem Anschlagelement, welches eine Sperrstellung, in der das Anschlagelement in den Vereinzelungsabschnitt hineinragt und den Transportkanal für das Befestigungselement sperrt, so dass ein Befestigungselement in einer Wartestellung an dem Anschlagelement anliegt, und eine Weitergabestellung, in der das Anschlagelement eine Bewegung des Befestigungselements in der Transportrichtung zu einer Bereitschaftsstellung erlaubt, aufweist, und mit einem Rückhalteelement, welches eine Rückhaltestellung, in der das Rückhalteelement in den Vereinzelungsabschnitt hineinragt und den Transportkanal für das Befestigungselement sperrt, so dass das Befestigungselement in der Bereitschaftsstellung an dem Rückhalteelement anliegt, und eine Freigabestellung, in der das Rückhalteelement eine Bewegung des Befestigungselements in der Transportrichtung über den Vereinzelungsabschnitt hinaus erlaubt, aufweist. Dadurch ist es möglich, die Befestigungselemente einzeln in die Bereitschaftsstellung zu befördern und anschliessend weiterzutransportieren.

Eine vorteilhafte Ausführungsform ist dadurch gekennzeichnet, dass das Anschlagelement und das Rückhalteelement in der Transportrichtung einen Abstand zueinander aufweisen, der verstellbar ist. Dadurch ist die Vereinzelungsvorrichtung für Befestigungselemente verschiedener Grösse und/oder Form einsetzbar.

Eine vorteilhafte Ausführungsform ist dadurch gekennzeichnet, dass das Anschlagelement linear zwischen der Sperrstellung und der Weitergabestellung bewegbar ist. Eine alternative Ausführungsform ist dadurch gekennzeichnet, dass das Anschlagelement zwischen der Sperrstellung und der Weitergabestellung verschwenkbar ist. Eine weitere vorteilhafte Ausführungsform ist dadurch gekennzeichnet, dass das Rückhalteelement linear zwischen der Rückhaltestellung und der Freigabestellung bewegbar ist. Eine alternative Ausführungsform ist dadurch gekennzeichnet, dass das Rückhalteelement zwischen der Rückhaltestellung und der Freigabestellung verschwenkbar ist.

Eine vorteilhafte Ausführungsform ist dadurch gekennzeichnet, dass jedes Befestigungselement eine Befestigungsrichtung definiert, in welcher das Befestigungselement in einen Untergrund einzutreiben vorgesehen ist, und wobei der Transportkanal ein Profil aufweist, welches eine Orientierung der Befestigungselemente vorgibt, in der die Befestigungsrichtung quer zur Transportrichtung orientiert ist.

Eine vorteilhafte Ausführungsform ist dadurch gekennzeichnet, dass die Vereinzelungsvorrichtung in einen Magazinvorsatz für eine Eintreibvorrichtung zum Eintreiben von Befestigungselementen in einen Untergrund eingesetzt wird, wobei der Magazinvorsatz ein Ansatzteil, welches einen Verbindungsbereich zum Verbinden des Magazinvorsatzes mit der Eintreibvorrichtung aufweist, und ein Anpressteil, welches einen Anlagebereich zum Anlegen des Magazinvorsatzes an den Untergrund aufweist, umfasst, wobei das Ansatzteil und das Anpressteil entlang einem Verschiebeweg in einer Anpressrichtung verschiebbar aneinander gehalten sind, wobei der Verschiebeweg durch eine Normalstellung und eine Anpressstellung begrenzt ist, und wobei der Magazinvorsatz eine Vereinzelungsvorrichtung nach einem der vorhergehenden Ansprüche umfasst.

Eine vorteilhafte Ausführungsform ist dadurch gekennzeichnet, dass das Anpressteil die Vereinzelungsvorrichtung aufweist, wobei das Ansatzteil ein Betätigungselement aufweist, welches das Anschlagelement und/oder das Rückhalteelement betätigt, wenn das Ansatzteil und das Anpressteil in der Anpressrichtung gegenüber einander verschoben werden. Eine weitere vorteilhafte Ausführungsform ist dadurch gekennzeichnet, dass das Ansatzteil die Vereinzelungsvorrichtung aufweist, wobei das Anpressteil ein Betätigungselement aufweist, welches das Anschlagelement und/oder das Rückhalteelement betätigt, wenn das Ansatzteil und das Anpressteil in der Anpressrichtung gegenüber einander verschoben werden.

Eine vorteilhafte Ausführungsform ist dadurch gekennzeichnet, dass das Anschlagelement in der Normalstellung des Magazinvorsatzes in der Sperrstellung und in der Anpressstellung des Magazinvorsatzes in der Weitergabestellung ist, und wobei das Rückhalteelement in der Normalstellung des Magazinvorsatzes in der Freigabestellung und in der Anpressstellung des Magazinvorsatzes in der Rückhaltestellung ist. Eine alternative Ausführungsform ist dadurch gekennzeichnet, dass das Anschlagelement in der Normalstellung des Magazinvorsatzes in der Weitergabestellung und in der Anpressstellung des Magazinvorsatzes in der Sperrstellung ist, und wobei das Rückhalteelement in der Normalstellung des Magazinvorsatzes in der Rückhaltestellung und in der Anpressstellung des Magazinvorsatzes in der Freigabestellung ist.

Eine vorteilhafte Ausführungsform ist dadurch gekennzeichnet, dass das Anpressteil eine Aufnahme für ein Befestigungselement und einen Durchlass für ein an der Eintreibvorrichtung angebrachtes Eintreibelement, mit Hilfe dessen ein Befestigungselement in der Aufnahme in den Untergrund eintreibbar ist, aufweist, wobei der Transportkanal für eine Zuführung eines in dem Vereinzelungsabschnitt vereinzelten Befestigungselements zur der Aufnahme vorgesehen ist.

Eine vorteilhafte Ausführungsform ist dadurch gekennzeichnet, dass der Magazinvorsatz in ein Befestigungssystem eingesetzt ist, welches eine Eintreibvorrichtung zum Eintreiben von Befestigungselementen in einen Untergrund umfasst, wobei der Verbindungsbereich mit der Eintreibvorrichtung verbunden ist. Bevorzugt ist die Eintreibvorrichtung als Bohrmaschine oder Schrauber, besonders bevorzugt als Akkuschrauber, ausgebildet.

Bevorzugt ist das Befestigungssystem für eine Verwendung in einer räumlichen Orientierung vorgesehen, in der das Anschlagelement über dem Rückhalteelement angeordnet ist, so dass ein Transport der Transportelemente in dem Vereinzelungsabschnitt mittels der Schwerkraft unterstützt oder bewerkstelligt wird.

Bevorzugt umfasst das Befestigungselement eine Spitze und/oder einen Kopf. Das Befestigungselement ist bevorzugt mit einem Gewinde versehen und als Schraube ausgebildet. Bei alternativen Ausführungsformen ist das Befestigungselement als Nagel, Bolzen oder Ähnliches ausgebildet.

Nachfolgend werden bevorzugte Ausführungsbeispiele unter Bezugnahme auf die Zeichnungen näher erläutert. Es zeigen:
- Fig. 1: ein Befestigungssystem und
- Fig. 2: eine Vereinzelungsvorrichtung in einem Querschnitt.

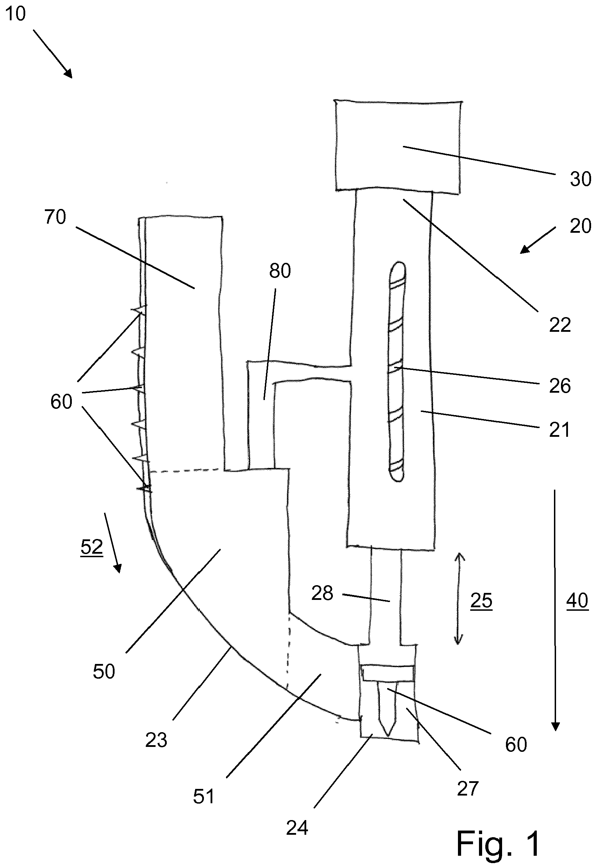

Fig. 1 zeigt ein Befestigungssystem 10 mit einer beispielsweise als Akkuschrauber ausgebildeten Eintreibvorrichtung 30 und einem dafür vorgesehenen Magazinvorsatz 20. Der Magazinvorsatz 20 umfasst ein Ansatzteil 21, welches einen Verbindungsbereich 22 zum Verbinden des Magazinvorsatzes 20 mit der Eintreibvorrichtung 30 aufweist, und ein Anpressteil 23, welches einen Anlagebereich 24 zum Anlegen des Magazinvorsatzes 20 an einen nicht dargestellten Untergrund aufweist. Das Ansatzteil 21 und das Anpressteil 23 sind entlang einem Verschiebeweg 25 in einer Anpressrichtung 40 verschiebbar aneinander gehalten, wobei der Verschiebeweg 25 durch eine Normalstellung und eine Anpressstellung begrenzt ist. Eine Anpressfeder 26 belastet das Ansatzteil 21 und das Anpressteil 23 in die Normalstellung vor, so dass der Magazinvorsatz 20 und damit das Befestigungssystem 10 gegen eine Federkraft der Anpressfeder 26 an einen Untergrund angepresst wird.

Das Anpressteil 23 weist eine Aufnahme 27 für ein Befestigungselement 60 und einen Durchlass 28 für ein an der Eintreibvorrichtung 30 angebrachtes Eintreibelement, mit Hilfe dessen das Befestigungselement 60 in der Aufnahme 27 in den Untergrund eintreibbar ist, auf. Das Befestigungselement 60 ist als Schraube mit einem Gewinde und einem Kopf ausgebildet. Das nicht dargestellte Eintreibelement ist als Schraubenbit ausgebildet. Bei nicht gezeigten Ausführungsbeispielen sind die Befestigungselemente als Nägel, Bolzen oder Ähnliches ausgebildet.

Das Anpressteil 23 umfasst eine Vereinzelungsvorrichtung 50 zur Vereinzelung eines Befestigungselements 60 aus einem mit Befestigungselementen 60 gefüllten Behälter 70 auf. Das Ansatzteil 21 weist ein Betätigungselement 80 zur Betätigung der Vereinzelungsvorrichtung 50 auf, wenn das Ansatzteil 21 und das Anpressteil 23 in der Anpressrichtung 40 gegenüber einander verschoben werden, beispielsweise wenn das Befestigungssystem 10 an einen Untergrund angepresst wird. Bei nicht gezeigten Ausführungsbeispielen weist das Ansatzteil die Vereinzelungsvorrichtung auf, und das Anpressteil weist ein Betätigungselement zur Betätigung der Vereinzelungsvorrichtung auf, wenn das Ansatzteil und das Anpressteil in der Anpressrichtung gegenüber einander verschoben werden. Die Vereinzelungsvorrichtung 50 umfasst einen Transportkanal 51 für einen Transport der Befestigungselemente 60 in einer Transportrichtung 52, um jeweils ein vereinzeltes Befestigungselement 60 der Aufnahme 27 zuzuführen.

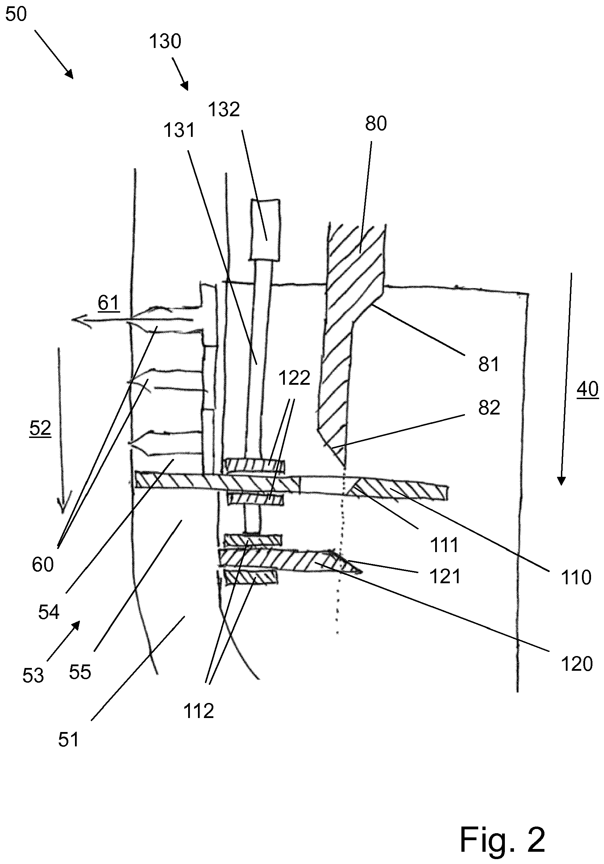

Fig. 2 zeigt die Vereinzelungsvorrichtung 50 mit dem Transportkanal 51 in einer Querschnittansicht. Der Transportkanal 51 weist einen Vereinzelungsabschnitt 53 auf. Die Vereinzelungsvorrichtung 50 umfasst ein Anschlagelement 110 und ein Rückhalteelement 120. Das Anschlagelement 110 ist in einer Sperrstellung dargestellt, in der es in den Vereinzelungsabschnitt 53 hineinragt und den Transportkanal 51 für die Befestigungselemente 60 sperrt, so dass ein Befestigungselement 60 in einer Wartestellung 54 an dem Anschlagelement 110 anliegt. Das Rückhalteelement 120 ist in einer Freigabestellung dargestellt, in der es eine Bewegung des Befestigungselements 60 in der Transportrichtung 52 über den Vereinzelungsabschnitt 53 hinaus erlaubt. Die Sperrstellung des Anschlagelements 110 und die Freigabestellung des Rückhalteelements 120 entsprechen der Normalstellung des Magazinvorsatzes.

Jedes Befestigungselement 60 definiert eine Befestigungsrichtung 61, in welcher das Befestigungselement 60 in einen Untergrund einzutreiben vorgesehen ist. Der Transportkanal 51 weist ein Profil auf, welches eine Orientierung der Befestigungselemente quer zur Transportrichtung 52 vorgibt. Bevorzugt ist die Befestigungsrichtung 61 senkrecht zur Transportrichtung 52 orientiert.

Wird der Magazinvorsatz, ausgehend von der Normalstellung, durch Anpressen des Befestigungssystems in die Anpressstellung überführt, bewegt sich das Betätigungselement 80 mit dem Ansatzteil in der Eintreibrichtung 40 relativ zum Anpressteil und damit zur Vereinzelungsvorrichtung 50. Das Betätigungselement 80 weist eine erste Betätigungsfläche 81 für eine Betätigung des Anschlagelements 110 und eine zweite Betätigungsfläche 82 für eine Betätigung des Rückhalteelements 120 auf. Das Anschlagelement 110 und das Rückhalteelement 120 weisen dazu eine erste Gegenfläche 111 beziehungsweise eine zweite Gegenfläche 121 auf. Aufgrund dessen, dass ein in der Eintreibrichtung 40 gemessener Abstand zwischen der ersten Betätigungsfläche 81 und der zweiten Betätigungsfläche 82 im Wesentlichen gleich gross ist wie ein in der Eintreibrichtung 40 gemessener Abstand zwischen der ersten Gegenfläche 111 und der zweiten Gegenfläche 121, werden beim Anpressen des Magazinvorsatzes an den Untergrund das Rückhalteelement 120 (in Fig. 2 nach links) und im Wesentlichen gleichzeitig das Anschlagelement 110 (in Fig. 2 nach rechts) betätigt. Durch die genannte Betätigung wird das Anschlagelement 110 in eine Weitergabestellung überführt, in der es eine Bewegung des Befestigungselements 60 in der Transportrichtung 52 zu einer Bereitschaftsstellung 55 erlaubt. Das Rückhalteelement 120 wird durch die genannte Betätigung in eine Rückhaltestellung überführt, in der es in den Vereinzelungsabschnitt 53 hineinragt und den Transportkanal 51 für das Befestigungselement 60 sperrt, so dass das Befestigungselement 60 in der Bereitschaftsstellung 55 an dem Rückhalteelement 120 anliegt.

Bei einem Abheben des Magazinvorsatzes von dem Untergrund bewegt sich das Betätigungselement 80 wieder in die in Fig. 2 gezeigte Stellung zurück und gibt eine Bewegung des Anschlagelements 110 zurück in die Sperrstellung und eine Bewegung des Rückhalteelements 120 zurück in die Freigabestellung frei. Dadurch kann sich das in der Bereitschaftsstellung 55 angeordnete Befestigungselement 60 in den Transportkanal 51 weiterbewegen. Die Rückbewegung des Anschlagelements 110 und des Rückhalteelements 120 wird durch nicht dargestellte Federn bewirkt, welche das Anschlagelement 110 auf die Sperrstellung und das Rückhalteelement 120 auf die Freigabestellung zu vorbelasten.

Das Anschlagelement 110 ist in der Normalstellung des Magazinvorsatzes in der Sperrstellung und in der Anpressstellung des Magazinvorsatzes in der Weitergabestellung, und das Rückhalteelement ist in der Normalstellung des Magazinvorsatzes in der Freigabestellung und in der Anpressstellung des Magazinvorsatzes in der Rückhaltestellung. Bei nicht gezeigten Ausführungsbeispielen ist das Anschlagelement in der Normalstellung des Magazinvorsatzes in der Weitergabestellung und in der Anpressstellung des Magazinvorsatzes in der Sperrstellung, wobei dann das Rückhalteelement in der Normalstellung des Magazinvorsatzes in der Rückhaltestellung und in der Anpressstellung des Magazinvorsatzes in der Freigabestellung ist.

Die Vereinzelungsvorrichtung 50 weist ein erstes Führungselement 112 für eine geführte Linearbewegung des Anschlagelements 110 zwischen der Sperrstellung und der Weitergabestellung und ein zweites Führungselement 122 für eine geführte Linearbewegung des Rückhalteelements 120 zwischen der Freigabestellung und der Rückhaltestellung auf. Bei nicht gezeigten Ausführungsbeispielen ist das Anschlagelement zwischen der Sperrstellung und der Weitergabestellung verschwenkbar und/oder das Rückhalteelement zwischen der Rückhaltestellung und der Freigabestellung verschwenkbar.

Ein in der Transportrichtung 52 gemessener Abstand zwischen dem Anschlagelement 110 und dem Rückhalteelement 120 ist darauf abgestimmt, dass nur ein einziges Befestigungselement in der Bereitschaftsstellung 55 befinden kann. Wird also das Befestigungssystem an einen Untergrund angepresst, wird genau ein Befestigungselement 60 von dem Anschlagelement 110 in die Bereitschaftsstellung 55 durchgelassen. Wird das Befestigungssystem nach einem Eintreibvorgang wieder von dem Untergrund abgehoben, wird das Befestigungselement 60 von dem Rückhalteelement 120 in den Transportkanal 51 durchgelassen, in welchem es sich aufgrund der Schwerkraft ungehindert bis in die Aufnahme des Anpressteils bewegen kann und dort bereit ist, in einem nachfolgenden Eintreibvorgang in den Untergrund eingetrieben zu werden. Somit werden die Befestigungselemente 60 einzeln in die Bereitschaftsstellung 55 befördert und anschliessend zur Aufnahme weitertransportiert.

Zur Anpassung der Grösse der Bereitschaftsstellung 55 an unterschiedliche Grössen und/oder Formen der Befestigungselemente weist die Vereinzelungsvorrichtung 50 eine Verstelleinrichtung 130 auf, mit welcher der in der Transportrichtung 52 gemessene Abstand zwischen dem Anschlagelement 110 und dem Rückhalteelement 120 verstellbar ist. Hierzu weist die Verstelleinrichtung 130 ein als Stellschraube ausgebildetes Stellelement 131 auf, welches durch ein nicht dargestelltes Stellgewinde an dem ersten Führungselement 112 geführt ist und an dem zweiten Führungselement 122 ansteht. Das Stellelement 131 weist ein Bedienelement 132 auf, so dass ein Benutzer des Magazinvorsatzes durch Drehung des Bedienelements 132 den Abstand zwischen dem ersten Führungselement 112 und dem zweiten Führungselement 122 und damit den Abstand zwischen dem Anschlagelement 110 und dem Rückhalteelement 120 einstellen kann.

Vorstehend wurde die Erfindung anhand mehrerer Ausführungsbeispiele einer Vereinzelungsvorrichtung, eines Magazinvorsatzes und eines Befestigungssystems erläutert. Die beschriebenen Merkmale sind dabei von jedem Ausführungsbeispiel auf alle anderen Ausführungsbeispiele einzeln oder in Kombination übertragbar, so lange sie sich nicht widersprechen. Es wird darauf hingewiesen, dass die erfindungsgemässe Vorrichtung auch für andere Zwecke einsetzbar ist.

## Patentansprüche

1. Vereinzelungsvorrichtung zur Vereinzelung eines Befestigungselements aus einem mit Befestigungselementen gefüllten Behälter, mit einem Transportkanal für einen Transport der Befestigungselemente in einer Transportrichtung, wobei der Transportkanal einen Vereinzelungsabschnitt aufweist, mit einem Anschlagelement, welches eine Sperrstellung, in der das Anschlagelement in den Vereinzelungsabschnitt hineinragt und den Transportkanal für das Befestigungselement sperrt, so dass ein Befestigungselement in einer Wartestellung an dem Anschlagelement anliegt, und eine Weitergabestellung, in der das Anschlagelement eine Bewegung des Befestigungselements in der Transportrichtung zu einer Bereitschaftsstellung erlaubt, aufweist, und mit einem Rückhalteelement, welches eine Rückhaltestellung, in der das Rückhalteelement in den Vereinzelungsabschnitt hineinragt und den Transportkanal für das Befestigungselement sperrt, so dass das Befestigungselement in der Bereitschaftsstellung an dem Rückhalteelement anliegt, und eine Freigabestellung, in der das Rückhalteelement eine Bewegung des Befestigungselements in der Transportrichtung über den Vereinzelungsabschnitt hinaus erlaubt, aufweist.

2. Vereinzelungsvorrichtung nach Anspruch 1, wobei das Anschlagelement und das Rückhalteelement in der Transportrichtung einen Abstand zueinander aufweisen, der verstellbar ist.

3. Vereinzelungsvorrichtung nach einem der vorhergehenden Ansprüche, wobei das Anschlagelement linear zwischen der Sperrstellung und der Weitergabestellung bewegbar ist.

4. Vereinzelungsvorrichtung nach einem der Ansprüche 1 und 2, wobei das Anschlagelement zwischen der Sperrstellung und der Weitergabestellung verschwenkbar ist.

5. Vereinzelungsvorrichtung nach einem der vorhergehenden Ansprüche, wobei das Rückhalteelement linear zwischen der Rückhaltestellung und der Freigabestellung bewegbar ist.

6. Vereinzelungsvorrichtung nach einem der Ansprüche 1 bis 4, wobei das Rückhalteelement zwischen der Rückhaltestellung und der Freigabestellung verschwenkbar ist.

7. Vereinzelungsvorrichtung nach einem der vorhergehenden Ansprüche, wobei jedes Befestigungselement eine Befestigungsrichtung definiert, in welcher das Befestigungselement in einen Untergrund einzutreiben vorgesehen ist, und wobei der Transportkanal ein Profil aufweist, welches eine Orientierung der Befestigungselemente vorgibt, in der die Befestigungsrichtung quer zur Transportrichtung orientiert ist.

8. Magazinvorsatz für eine Eintreibvorrichtung zum Eintreiben von Befestigungselementen in einen Untergrund, mit einem Ansatzteil, welches einen Verbindungsbereich zum Verbinden des Magazinvorsatzes mit der Eintreibvorrichtung aufweist, und mit einem Anpressteil, welches einen Anlagebereich zum Anlegen des Magazinvorsatzes an den Untergrund aufweist, wobei das Ansatzteil und das Anpressteil entlang einem Verschiebeweg in einer Anpressrichtung verschiebbar aneinander gehalten sind, wobei der Verschiebeweg durch eine Normalstellung und eine Anpressstellung begrenzt ist, und wobei der Magazinvorsatz eine Vereinzelungsvorrichtung nach einem der vorhergehenden Ansprüche umfasst.

9. Magazinvorsatz nach Anspruch 8, wobei das Anpressteil die Vereinzelungsvorrichtung aufweist, wobei das Ansatzteil ein Betätigungselement aufweist, welches das Anschlagelement und/oder das Rückhalteelement betätigt, wenn das Ansatzteil und das Anpressteil in der Anpressrichtung gegenüber einander verschoben werden.

10. Magazinvorsatz nach einem der Ansprüche 8 und 9, wobei das Ansatzteil die Vereinzelungsvorrichtung aufweist, wobei das Anpressteil ein Betätigungselement aufweist, welches das Anschlagelement und/oder das Rückhalteelement betätigt, wenn das Ansatzteil und das Anpressteil in der Anpressrichtung gegenüber einander verschoben werden.

11. Magazinvorsatz nach einem der Ansprüche 8 bis 10, wobei das Anschlagelement in der Normalstellung des Magazinvorsatzes in der Sperrstellung und in der Anpressstellung des Magazinvorsatzes in der Weitergabestellung ist, und wobei das Rückhalteelement in der Normalstellung des Magazinvorsatzes in der Freigabestellung und in der Anpressstellung des Magazinvorsatzes in der Rückhaltestellung ist.

12. Magazinvorsatz nach einem der Ansprüche 8 bis 10, wobei das Anschlagelement in der Normalstellung des Magazinvorsatzes in der Weitergabestellung und in der Anpressstellung des Magazinvorsatzes in der Sperrstellung ist, und wobei das Rückhalteelement in der Normalstellung des Magazinvorsatzes in der Rückhaltestellung und in der Anpressstellung des Magazinvorsatzes in der Freigabestellung ist.

13. Magazinvorsatz nach einem der Ansprüche 8 bis 12, wobei das Anpressteil eine Aufnahme für ein Befestigungselement, einen Durchlass für ein an der Eintreibvorrichtung angebrachtes Eintreibelement, mit Hilfe dessen ein Befestigungselement in der Aufnahme in den Untergrund eintreibbar ist, aufweist, und wobei der Transportkanal für eine Zuführung eines in dem Vereinzelungsabschnitt vereinzelten Befestigungselements zur der Aufnahme vorgesehen ist.

14. Befestigungssystem, umfassend eine Eintreibvorrichtung zum Eintreiben von Befestigungselementen in einen Untergrund, insbesondere Bohrmaschine oder Schrauber, und einen Magazinvorsatz nach einem der Ansprüche 8 bis 13, wobei der Verbindungsbereich mit der Eintreibvorrichtung verbunden ist.

15. Befestigungssystem nach Anspruch 14, vorgesehen für eine Verwendung in einer räumlichen Orientierung, in der das Anschlagelement über dem Rückhalteelement angeordnet ist, so dass ein Transport der Transportelemente in dem Vereinzelungsabschnitt mittels der Schwerkraft unterstützt oder bewerkstelligt wird.
